## Europäisches Patentamt

(19) **European Patent Office**

**Office européen des brevets**

(11) Publication number: **0 208 398**
**B1**

(12) # EUROPEAN PATENT SPECIFICATION

(45) Date of publication of the patent specification:
**01.03.89**

(51) Int. Cl.⁴: **F16H 11/06**

(21) Application number: **86303401.3**

(22) Date of filing: **06.05.86**

(54) Control system for a continuously variable pulley-type transmission.

(30) Priority: **23.05.85 US 737288**

(43) Date of publication of application:
**14.01.87 Bulletin 87/3**

(45) Publication of the grant of the patent:
**01.03.89 Bulletin 89/9**

(84) Designated Contracting States:
**DE FR GB**

(56) References cited:
**DE-A- 2 808 810**
**US-A- 2 829 533**
**US-A- 2 916 227**

(73) Proprietor: **GENERAL MOTORS CORPORATION,
General Motors Building 3044 West Grand Boulevard,
Detroit Michigan 48202(US)**

(72) Inventor: **Vahabzadeh, Hamid, 2619 West Avon Road,
Rochester Hills Michigan 48063(US)**

(74) Representative: **Breakwell, John Neil Bower et al, GM
Patent Section Vauxhall Motors Limited Luton Office
(F6) P.O. Box No. 3 Kimpton Road, Luton Bedfordshire
LU2 0SY(GB)**

## Description

This invention relates to a hydraulic control system for a continuously variable transmission as specified in the preamble of claim 1, for example as disclosed in US-A 4 261 213.

It is known in prior-art transmission controls for the torque transmitted to be utilised as a control signal source for a valve member. The prior-art mechanisms utilizing a torque signal have generally taken one or other of two forms, namely involving either twisting deformation about the axis of a rotating shaft member or axial displacement along the axis of a rotating shaft member. Both of these forms can provide a signal indicating the amount of torque transmitted.

In the systems using twisting deformation about the axis of a shaft, it is necessary to provide very accurate tolerance control during manufacture to permit repeatability from system to system. In the axial-displacement systems, the axial dimension along one of the drive axes must be sufficient to house the sensing mechanism and the valve mechanism. In such systems, the sensing mechanism is generally a ball and cam, as in the said US-A 4 261 213. In both systems it is necessary to provide rotary seals, since the valve mechanisms used therein are generally rotatable with the torque sensor or have fluid transmitted through the shaft on which the torque sensor is mounted.

The present invention is concerned with the conservation of axial space in the drive arrangement, and the reduction of manufacturing tolerances, by utilizing the transmission gear arrangement as a torque signal source for the torque sensor.

To this end a hydraulic control system for a continuously variable transmission in accordance with the present invention is characterised by the features specified in the characterising portion of claim 1.

The valving of the hydraulic control system can be spaced from the rotary axis of the gearing, in a stationary housing. Since the valve members are not disposed within a rotating mechanism, rotary seals are not needed.

The present invention thereby makes available an improved hydraulic control system for a hydraulically adjustable pulley drive and a gearing transmission, wherein the torque transmitted by the gearing is imposed on a valve mechanism as a control signal so that the valve mechanism will operate to cause the pressure signal to be distributed to a control valve which directs fluid pressure to the hydraulic adjustment mechanism for the drive pulley, to thereby establish the torque capacity in the drive pulley portion of the transmission.

The hydraulic control system may include a torque control valve for providing a pressure signal to the pulley mechanism for controlling the torque capacity thereof, and a torque-responsive control valve for supplying a control signal to the torque control valve in response to the torque transmitted by the gearing.

The torque control valve may have imposed thereon a pulley ratio signal in opposition to the torque signal, and the torque-responsive control valve may include a mechanical connection to the gearing portion of the transmission and a hydraulically operated servo motor.

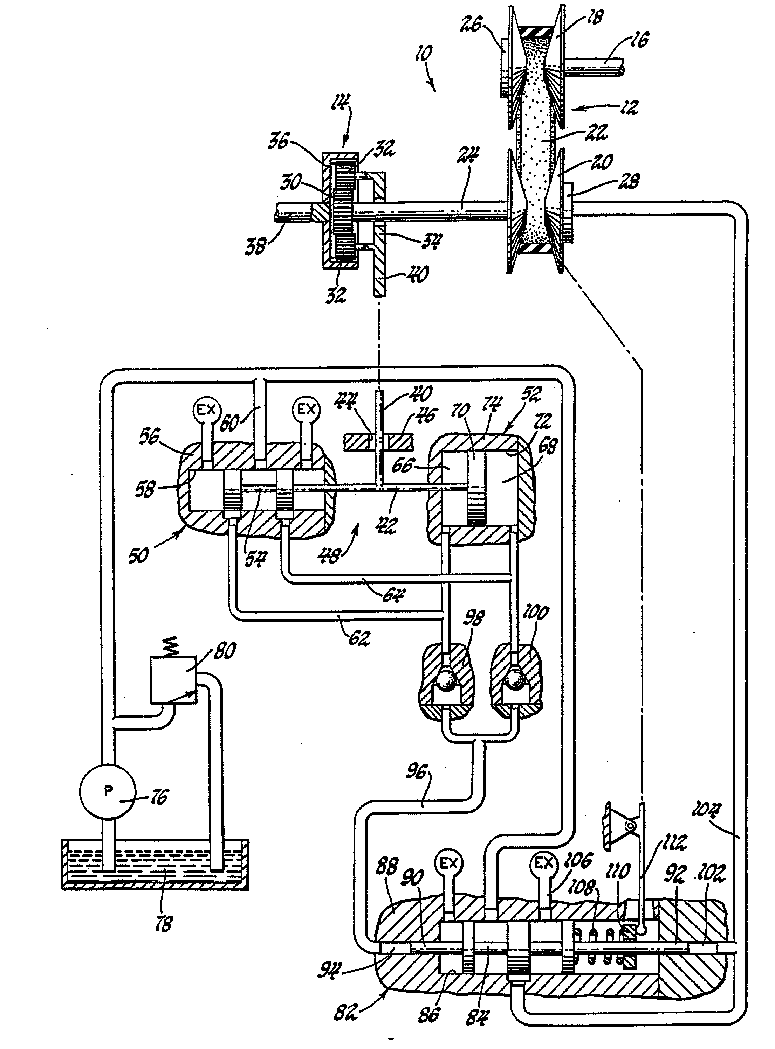

The single Figure of the drawing is a diagrammatic representation of a vehicular transmission mechanism having a control system in accordance with the present invention.

The single Figure of the drawing depicts a continuously variable power transmission generally designated 10 which includes a variable-ratio pulley mechanism 12 and a gearing arrangement 14. The variable-ratio pulley mechanism 12 includes an input shaft 16, a variable (adjustable) input pulley 18, a variable (adjustable) output pulley 20, a continuous-belt drive member 22 and a pulley output shaft 24.

The variable pulleys 18 and 20 include conventional control mechanisms 26 and 28 respectively. The control mechanism 28 is a hydraulically operated control mechanism, and the control mechanism 26 can be either a hydraulic or a mechanical control mechanism. The pressure in the control mechanism must be sufficient to establish the torque capacity of the pulley mechanism 12 at a level equal to or greater than the torque required at the pulley output shaft 24. These types of drive system and controls therefore are well-known.

The pulley output shaft 24 is drivingly connected to a sun gear 30 which is a component of the gearing arrangement 14. The gearing arrangement 14 further includes a plurality of pinion gears 32 rotatably mounted on a carrier 34 (non rotatable element) and meshing with the sun gear 30. A ring gear 36 of the gearing arrangement 14 is disposed in meshing relation with the pinion gears 32 and is drivingly connected to a transmission output shaft 38.

As is well-known in gearing arrangements such as 14, when torque is transmitted from the sun gear 30 to the ring gear 36 a reaction torque is absorbed by the carrier 34. In the present arrangement, the carrier 34 has a rod extension portion 40 which is connected to a valve control rod 42 defining a torque-sensing means. In the drawing the valve control rod 42 is shown rotated 90° out of its operative position, for simplicity of representation. The rod extension portion 40 passes through an opening 44 formed in the housing 46, whereby the side walls of the opening 44 will absorb the reaction torque of the carrier 34 if the movement of the rod extension portion 40 is excessive.

The valve control rod 42 is a component in a torque-responsive control valve mechanism, generally designated 48, which includes a torque-responsive control valve 50 (second valve means) and a servo motor 52. The torque-responsive control valve 50 has a valve spool 54 operatively connected to the valve control rod 42, and a valve housing 56 in which is formed a valve bore 58. The valve bore 58 is in fluid communication with a main pressure passage 60 and with two torque signal passages 62 and 64. The valve spool 54 is slidably disposed in the valve bore 58 to control fluid communication between the pressure passage 60 and the signal passages 62 and 64, and between the signal passages 62 and 64 and respective exhaust passages.

The torque signal passages 62 and 64 are connected to chambers 66 and 68 respectively of the servo motor 52. The servo motor 52 includes a piston 70 that is slidably disposed in a cylinder 72 formed in a housing 74. The piston 70 co-operates with the housing 74 to form the chambers 66 and 68, and the piston 70 is operatively connected to the valve control rod 42.

The main pressure passage 60 receives fluid from a conventional pump which forms a pressure fluid source 76 and draws fluid from a reservoir 78. The pressure level in the main pressure passage 60 is controlled by a conventional system pressure regulator 80. The pressure regulator 80 may be a single pressure level valve or a variable pressure level valve; both of these types of pressure regulator valve are known. The main pressure passage 60 is in fluid communication with a torque control valve generally designated 82 (first valve means).

The torque control valve 82 includes a valve spool 84 slidably disposed in a bore 86 formed in a housing 88. The valve spool 84 has integrally formed therewith, or otherwise operatively connected thereto, a pair of pistons 90 and 92. The piston 90 is slidably disposed in a bore 94 which is in fluid communication with a torque signal passage 96. The torque signal passage 96 is connected by way of a pair of check valves 98 and 100 which are in fluid communication with the torque signal passages 62 and 64 respectively, whereby the higher of the pressure levels in the passages 62 and 64 will be transmitted through the respective check valve 98 or 100 to the torque signal passage 96. This pressure signal will operate on the end of the piston 90, thereby imposing a rightward force (as viewed in the drawing) on the valve spool 84.

The piston 92 is slidably disposed in a bore 102 which is in fluid communication with a torque control passage 104 that is connected between the bore 86 and the hydraulic control mechanism 28. The pressure in the torque control passage 104 is variably controlled at a pressure level between the pressure in the main pressure passage 60 and the pressure in an exhaust passage 106. An increase in the pressure in the passage 104 results in an increased torque capacity in the belt drive mechanism, and conversely.

The pressure in the bore 102 operates on the piston 92 to impose a leftward force (as viewed in the drawing) on the valve spool 84. The valve spool 84 also has a leftward force imposed thereon from a spring member 108 which is compressed between the valve spool 84 and a movable spring seat 110. The position of the movable spring seat 110 is controlled by a rod 112 which is responsive to the axial position of the axially movable sheave (pulley portion) of the pulley 20. Parts 108, 110, 112 define a feedback means.

As is well-known in variable-ratio pulley drives, the axial position of one of the axially movable sheaves of a pulley is proportional to the drive ratio between the pulleys. Therefore the positioning of the movable spring seat 110 will provide a control signal which is proportional to the drive ratio in the variable-ratio pulley mechanism 12.

When torque is transmitted through the pulley mechanism 12 and the gearing arrangement 14, there will be a tendency for the carrier 34 to move, thereby causing the valve control rod 42 to move rightwardly or leftwardly as viewed in the drawing. Movement of the rod 42 will result in movement of the valve spool 54 to give fluid communication between the main pressure passage 60 and one or other of the torque signal passages 62 and 64. For the purpose of description, it will be assumed that the valve spool 54 is moved leftwardly, and that therefore the passage 62 is pressurized and the passage 64 is exhausted.

The pressure in the passage 62 is communicated to the chamber 66 of the servo motor 52 and through the check valve 98 to the torque signal passage 96. When the pressure in the chamber 66 acting on the servo motor piston 70 is sufficient to overcome the force on the control rod 42 (that is, the reaction torque on the carier 34) which caused the leftward movement, the control rod 42 and the valve spool 54 connected thereto will be returned to the neutral position shown. Thus the pressure in the torque signal passage 62 is proportional to the reaction torque on the carrier 34. The resulting pressure in the torque signal passage 96 will provide a torque signal to the piston 90 of the torque control valve 82 for rightward movement of the valve spool 84. This movement of the valve spool 84 will result in fluid communication between the main pressure passage 60 and the torque control passage 104, and the pressure in the torque control passage 104 will act on the hydraulic control mechanism 28 to change the torque capacity of the pulley mechanism 12.

The pressure in the torque control passage 104 will also act on the piston 92 of the torque control valve 82 to impose a counterbalancing force in opposition to the torque signal imposed on the piston 90 of this valve. Axial movement of the movable sheave of the variable pulley 20 will result in a change in the spring force of the spring member 108. As the belt member 22 moves radially outwardly on the variable pulleys 18 and 20, the spring force of the spring member 108 will decrease, whereby there will be a higher pressure in the torque control passage 104 in response to a given torque signal. The pressure in the torque control passage 104 and the bore 102 will change to establish a new force balance on the valve spool 84, at which time the valve spool 84 will be returned to the neutral position shown. The piston 90 and bore 94 of the torque control valve 82 can be designed to permit controlled leakage such that continuous fluid flow will be necessary to maintain the torque signal.

In the alternative, a fixed restriction can be provided for controlling leakage from the torque signal passage 96. Since such a leakage arrangement will require a continuous fluid flow, the valve spool 54 of the torque-responsive control valve 50 will be designed not to return to a neutral position but to remain slightly open to provide the required make-up fluid flow. The same action is provided for the valve spool 84 of the torque control valve 82, in that the pressure in the bore 102 is not fully sealed from exhaust.

If the vehicle being driven by the transmission 10 encounters a down-grade, the reaction torque on the carrier 34 will be reduced. A torque reduction at the carrier 34 will likewise occur if the operator decreases the fuel feed. When the reaction torque on the carrier 34 is reduced, the pressure in the chamber 66 of the servo motor 52 causes the piston 70 and the valve spool 54 of the torque-responsive control valve 50 to move rightwardly, thereby reducing the pressure in the torque signal passage 62, so that the torque signal on the torque control valve 82 is reduced. This will result in a reduction in the pressure in the torque control passage 104.

From the above description of the operation, it will be evident that the torque capacity within the transmission 10 is controlled in part by the torque being transmitted through the pulley drive mechanism 12. With the system as described, the control valves 50 and 82 will not require provision for rotating seal members.

Further, the axial dimensioning of the pulleys 18 and 20 does not involve a space requirement for the valve mechanisms utilized by prior-art systems. The carrier 34 is a conventional gearing member, and does not increase the axial size of the gearing arrangement 14. Since the movement of the carrier 34 in response to torque transmission is rotary rather than axial, axial space does not have to be provided to accommodate this signal movement.

## Claims

1. A hydraulic control system for a continuously variable transmission having an input shaft (16), hydraulically adjustable axially movable pulley members (18, 20) defining a variable-ratio pulley mechanism (12) and an output shaft (38), the control system comprising a source (76) of fluid pressure, first valve means (82) connected to the source (76) and operable to supply control fluid to one (20) of the adjustable pulley members (18, 20), the control fluid acting on the first valve means (82) to impose a force thereon, second valve means (50) having a connection to a torque-sensing means (40, 42) and a fluid connection to the first valve means (82), and feedback means (108, 110, 112) for imposing a force proportional to the axial position of said one adjustable pulley member (20) on the first valve means (82) in addition to the control fluid-imposed force, characterised in that the control system includes a gearing arrangement (14) for transmitting torque from said pulley mechanism (12) to said output shaft (38), said torque-sensing means (40, 42) is operatively connected to a non-rotatable element (34) of the gearing arrangement (14) and is effective to transmit a force proportional to the torque transmitted by the gearing arrangement (14), a servo motor (52) is operatively connected to the torque-sensing means (40, 42), the second valve means (50) is connected to the torque-sensing means (40, 42) and is operable on a change of torque transmission to distribute a fluid-pressure signal from the source (76) to the servo motor (52), the servo motor (52) is responsive to the pressure fluid to balance the force on the torque-sensing means (40, 42) and discontinue fluid distribution thereto, an directing means (62, 64, 98, 100, 96) are provided for directing the fluid-pressure signal from the second valve means (50) to the first valve means (82).

2. A hydraulic control system according to claim 1, characterised in that said directing means (62, 64, 98, 100, 96) include check valves (98, 100) for distributing pressure fluid from the servo motor (52) to the first valve means (82) to counteract the forces imposed by the feedback means (108, 110, 112) and by the control fluid.

3. A hydraulic control system according to claim 1 or 2, characterised in that the first valve means (82) is a torque control valve which is operable to establish the torque capacity of said one adjustable pulley member (20), the second valve means (50) is a torque signal valve which is operable on said change of torque transmission to distribute pressure fluid from the source (76) to the servo motor (52), and said directing means (62, 64, 98, 100, 96) distributing the pressure fluid to the torque control valve (82) are effective to cause the torque control valve (82) to effect a change in the pressure level of the control fluid and thereby change the torque capacity of the transmission (10).

## Patentansprüche

1. Hydraulisches Steuersystem für ein stufenlos verstellbares Getriebe mit einer Eingangswelle (16), hydraulisch verstellbaren, axial bewegbaren Riemenscheiben-Elementen (18, 20), die einen Riemenmechanismus (12) mit verstellbarem Verhältnis bestimmen, und einer Ausgabewelle (38), wobei das Steuersystem umfaßt: eine Fluid-Druckquelle (76), erste mit der Quelle (76) verbundene Ventilmittel (82), zur Zuführung von Steuerfluid zu einem (20) der verstellbaren Riemenscheiben-Elemente (18, 20) betätigbar, wobei das Steuerfluid auf das erste Ventilmittel (82) zur Übertragung einer Kraft auf dieses einwirkt, zweite Ventilmittel (15) mit einer Verbindung zu einem Drehmoment-Fühlermittel (40, 42) und einer Fluidverbindung zu dem ersten Ventilmittel (82), und Rückkoppelmittel (108, 110, 112) zur Ausübung einer der Axialstellung des einen Riemenscheiben-Elementes (20) proportionalen Kraft auf das erste Ventilmittel (82), zusätzlich zu der durch das Steuerfluid ausgeübten Kraft, dadurch gekennzeichnet, daß das Steuersystem enthält: eine Zahngetriebeanordnung (14) zur Übertragung von Drehmoment von dem Riemenscheiben-Mechanismus (12) zu der Abgabewelle (38), wobei das Drehmoment-Fühlermittel (40, 42) wirksam mit einem nicht drehbaren Element (34) der Zahngetriebeanordnung (14) verbunden und die Übertragung einer dem durch die Zahngetriebeanordnung (14) übertragenen Drehmoment proportionalen Kraft bewirkt, daß ein Servomotor (52) wirksam mit dem Drehmoment-Fühlermittel (40, 42) verbunden ist, daß das zweite Ventilmittel (50) mit dem Drehmoment-Fühlermittel (40, 42) verbunden und bei einer Änderung der Drehmomentübertragung zur Verteilung eines Fluiddrucksignals von der Quelle (76) zu dem Servomotor (52) betreibbar ist, daß der Servomotor (52) in Abhängigkeit von dem Druckfluid die Kraft auf das Drehmoment-Fühlermittel (40, 42) ausgleicht und die Fluidverteilung dazu unterbricht und daß Leitmittel (62, 64, 98, 100, 96) vorgesehen sind, um das Fluiddrucksignal von dem zweiten Ventilmittel (50) zu dem ersten Ventilmittel (82) zu leiten.

2. Hydrauliksteuersystem nach Anspruch 1, dadurch gekennzeichnet, daß die Leitmittel (62, 64, 98, 100, 96) Rückschlagventile (98, 100) zum Verteilen von Druckfluid von dem Servomotor (52) zu dem ersten Ventilmittel (82) enthalten, um den durch die Rückkoppelmittel (108, 110, 112) und durch das Steuerfluid ausgeübten Kräften entgegenzuwirken.

3. Hydrauliksteuersystem nach Anspruch 1 oder 2, dadurch gekennzeichnet, daß das erste Ventilmittel (82) ein Drehmomentsteuerventil ist, welches zur Errichtung der Drehmomentkapazität des einen verstellbaren Riemenscheiben-Elementes (20) betreibbar ist, daß das zweite Ventilmittel (50) ein Drehmomentsignalventil ist, welches auf die Änderung der Drehmomentübertragung hin zum Verteilen von Druckfluid von der Quelle (76) zu dem Servomotor (52) betreibbar ist, und daß die Leitmittel (62, 64, 98, 100, 96), welche das Druckfluid zu dem Drehmomentsteuerventil (82) verteilen, wirksam sind, das Drehmomentsteuerventil (82) zur Bewirkung einer Änderung des Druckpegels des Steuerfluids und dadurch zur Änderung der Drehmomentkapazität des Getriebes (10) zu veranlassen.

## Revendications

1. Système de commande hydraulique pour une transmission à variation continue possédant un arbre d'entrée (16), des poulies (18 et 20) mobile dans la direction axiale et réglables par une action hydraulique qui définissent un mécanisme à poulies à rapport variable (12), et un arbre de sortie (38), le système de commande comprenant une source de pression de fluide (76), des premiers moyens à valve (82) reliés à la source (76) et pouvant être mis en action pour transmettre un fluide de commande à l'une (20) des poulies réglables (18, 20), le fluide de commande agissant sur les premiers moyens à valve (82) pour exercer une force sur ces moyens, des deuxième moyens à valve (50) étant en liaison avec des moyens sensible au couple (40, 42) et en liaison par fluide avec les premiers moyens à valve (82), et des moyens de réaction (108, 110, 112) destinés à imposer aux premiers moyens à valve (82) une force proportionnelle à la position axiale de ladite poulie réglable (20), en supplément de la force exercée par le fluide de commande, caractérisé en ce que le système de commande comprend un mécanisme à engrenages (14) servant à transmettre un couple dudit mécanisme à poulies (12) audit arbre de sortie (38); lesdits moyens sensibles au couple (40, 42) sont reliés fonctionnellement à un élément non rotatif (34) du mécanisme à engrenages (14) et ont pour effet de transmettre une force proportionnelle au couple qui est transmis par le mécanisme à engrenages (14); un servo-moteur (52) est relié fonctionnellement aux moyens sensibles au couple (40, 42); les deuxièmes moyens à valve (50) sont reliés aux moyens sensibles au couple (40, 42) et peuvent être mis en action en réponse à une variation de la transmission du couple pour transmettre un signal de pression de fluide de la source (76) au servo-moteur (52); le servo-moteur (52) répond au fluide de pression en équilibrant la force exercée sur les moyens sensibles au couple (40, 42) et en interrompant la transmission du fluide à ces moyens; et des moyens de direction (62, 64, 98, 100, 96) sont prévus pour transmettre le signal de pression de fluide desdits deuxièmes moyens à valve (50) aux premiers moyens à valve (82).

2. Système de commande hydraulique selon la revendication 1, caractérisé en ce que lesdits moyens de direction (62, 64, 98, 100, 96) comprennent des clapets anti-retour (98, 100) destinés à transmettre le fluide sous pression du servo-moteur (52) aux premiers moyens à valve (82) pour agir en sens inverse des forces imposées par les moyens de réaction (108, 110, 112) et par le fluide de commande.

3. Système de commande hydraulique selon la revendication 1 ou 2, caractérisé en ce que les premiers moyens à valve (82) sont constitués par une valve de commande du couple qui peut être mise en action pour établir la capacité de transmission du couple de ladite première poulie réglable (20); les deuxièmes moyens à valve (50) sont constitués par une valve de signal de couple qui agit en réponse à ladite variation de la transmission du couple en transmettant la pression du fluide de la source (76) au servo-moteur (52), et lesdits moyens de direction (62, 64, 98, 100, 96) qui transmettent le fluide de pression à la valve de commande du couple (82) ont pour effet d'amener la valve de commande du couple (82) à effectuer une modification du niveau de pression du fluide de commande et à faire varier par ce moyen la capacité de transmission du couple de la transmission (10).